# EUROPEAN PATENT SPECIFICATION

(11) **EP 3 352 383 B1**
(45) Date of publication and mention of the grant of the patent: **25.12.2019**
(21) Application number: 18151786.3
(22) Date of filing: 16.01.2018
(51) Int. Cl.: H04B 7/06

(54) **METHOD AND DEVICE FOR TRANSMITTING UPLINK SIGNAL**
VERFAHREN UND VORRICHTUNG ZUR ÜBERTRAGUNG VON UPLINK-SIGNALEN
PROCÉDÉ ET DISPOSITIF DE TRANSMISSION DE SIGNAUX EN LIAISON MONTANTE

(30) Priority: 20.01.2017 CN 201710040962
(43) Date of publication of application: 25.07.2018
(73) Proprietor: Beijing Xiaomi Mobile Software Co., Ltd., Beijing 100085 (CN)
(72) Inventor: HUANG, Jiangtao, Beijing (CN)
(74) Representative: Steinbauer, Florian

(56) References cited:
- AU-A4- 2016 101 775
- US-B2- 9 331 760

## Description

### TECHNICAL FIELD

The present invention relates to the field of communication technology, and more particularly, to a method and a device for transmitting an uplink signal.

### BACKGROUND

With the development of communication technology, applications of a terminal, such as a phone, are increasingly popular. An antenna array is generally arranged in the terminal. The antenna array may include a plurality of antennas. The terminal may transmit an uplink signal to a base station via the plurality of antennas, so as to communicate with the base station or another terminal. However, the antenna array may be sheltered partially when the terminal is transmitting the uplink signal. For example, as the terminal is held by a user's hand, the antenna array may be sheltered partially by the user's hand. Thus, a quality of transmitting the uplink signal may be weakened. In related arts, a position of the terminal may be adjusted to avoid sheltering the antenna array, thereby enhancing the quality of transmitting the uplink signal.

Document AU 2016101775 A4 discloses an electronic device with millimeter wave antennas and metal housings.

Document US 9331760 B2 discloses a method, an apparatus and a computer program product for wireless communication.

### SUMMARY

The invention is defined by the independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention. According to embodiments of the present invention, there is provided a method for transmitting an uplink signal according to claim 1.

In an embodiment, after judging that there is at least one unsheltered antenna array in the plurality of antenna arrays and transmitting the uplink signal via the selected antenna array, the method further includes:
during a transmission of the uplink signal, detecting in real time whether there are one or more antennas sheltered in the current selected antenna array for transmitting the uplink signal; and
when it is detected that there are one or more antennas sheltered in the current selected antenna array for transmitting the uplink signal, reselecting another antenna array from the plurality of antenna arrays, instead of the current selected antenna array, to transmit the uplink signal.

In an embodiment, after judging that there is no unsheltered antenna array in the plurality of antenna arrays and transmitting the uplink signal via the selected antenna array, the method further includes:
during a transmission of the uplink signal, detecting in real time the number of one or more antennas sheltered in the current selected antenna array for transmitting the uplink signal; and
when the detected number is greater than a preset threshold, reselecting another antenna array from the plurality of antenna arrays, instead of the current selected antenna array, to transmit the uplink signal.

In an embodiment, judging whether there is at least one unsheltered antenna array in a plurality of antenna arrays includes:
determining a sheltered position of the terminal;
for each of the plurality of antenna arrays, judging whether each of locations of antennas in a corresponding antenna array is same as the sheltered position; and
when the locations of the antennas in the corresponding antenna array are not same as the sheltered position, determining the corresponding antenna array as the unsheltered antenna array.

In an embodiment, determining a sheltered position of the terminal includes:
when it is detected that a first sensor mounted on the terminal is sheltered, determining a location of the first sensor as the sheltered position; and/or
determining a gesture of the terminal based on a second sensor mounted on the terminal, and determining the sheltered position based on the gesture.

According to embodiments of the present invention, there is provided a device for transmitting an uplink signal according to claim 6.

In an embodiment, the device further includes:
a first detecting module, configured to, during a transmission of the uplink signal, when it is judged by the judging module that there is at least one unsheltered antenna array in the plurality of antenna arrays, detect in real time whether there are one or more antennas sheltered in the current selected antenna array for transmitting the uplink signal; and
a third selecting module, configured to, when there are one or more antennas sheltered in the current selected antenna array for transmitting the uplink signal, reselect another antenna array from the plurality of antenna arrays, instead of the current selected antenna array, to transmit the uplink signal.

In an embodiment, the device further includes:
a second detecting module, configured to, during a transmission of the uplink signal, when it is judged by the judging module that there is no unsheltered antenna array in the plurality of antenna arrays, detect in real time the number of one or more antennas sheltered in the current selected antenna array for transmitting the uplink signal; and
a fourth selecting module, configured to, when the number is greater than a preset threshold, reselect another antenna array from the plurality of antenna arrays, instead of the current selected antenna array, to transmit the uplink signal.

In an embodiment, the device further includes:
a first determining sub-module, configured to determine a sheltered position of the terminal;
a judging sub-module, configured to, for each of the plurality of antenna arrays, judge whether each of locations of antennas in a corresponding antenna array is same as the sheltered position; and
a second determining sub-module, configured to, when the locations of the antennas in the corresponding antenna array are not same as the sheltered position, determine the corresponding antenna array as the unsheltered antenna array.

In an embodiment, the first determining sub-module is further configured to:
when it is detected that a first sensor mounted on the terminal is sheltered, determine a location of the first sensor as the sheltered position; and/or
determine a gesture of the terminal based on a second sensor mounted on the terminal, and determine the sheltered position based on the gesture.

According to embodiments of the present invention, there is provided an apparatus for transmitting an uplink signal. The apparatus includes:
a processor; and
a memory configured to store an instruction executable by the processor;
in which the processor is configured to perform any above method.

According to embodiments of the present invention, there is provided a non-transitory computer-readable storage medium having stored therein instructions that, when executed by a processor of a device, causes the device to perform any above method.

It is to be understood that, both the foregoing general description and the following detailed description are exemplary and explanatory only and are not restrictive of the present invention.

### BRIEF DESCRIPTION OF THE DRAWINGS

The accompanying drawings herein are incorporated in and become parts of the specification, illustrate embodiments consistent with the invention and, together with the description, serve to explain the principles of the invention.
Fig. 1 is a flow chart illustrating a method for transmitting an uplink signal according to an exemplary embodiment.
Fig. 2A is a flow chart illustrating another method for transmitting an uplink signal according to an exemplary embodiment.
Fig. 2B is a schematic diagram illustrating a terminal according to an exemplary embodiment.
Fig. 2C is schematic diagram illustrating a transmission of an uplink signal via a terminal according to an exemplary embodiment.
Fig. 2D is a schematic diagram illustrating another transmission of an uplink signal via a terminal according to an exemplary embodiment.
Fig. 3 is a block diagram illustrating a device for transmitting an uplink signal according to an exemplary embodiment.
Fig. 4 is a schematic diagram illustrating an apparatus for transmitting an uplink signal according to an exemplary embodiment.

### DETAILED DESCRIPTION

Descriptions will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

Before making detailed descriptions and explanations to the embodiments of the present invention, application scenarios of the embodiments may be illustrated herein. Generally, a terminal may transmit an uplink signal to a base station via an antenna array arranged in the terminal, so as to communicate with the base station or another terminal. However, if the antenna array is partially or entirely sheltered during a transmission of the uplink signal via the antenna array, a quality of transmitting the uplink signal via the terminal may be affected. Although it may avoid sheltering the antenna array by adjusting a location of the terminal or via other means, it is difficult to quickly and accurately relieve the antenna array from being sheltered. As a result, the quality of transmitting the uplink signal may be weakened. Therefore, embodiments of the present invention provide a method for transmitting an uplink signal.

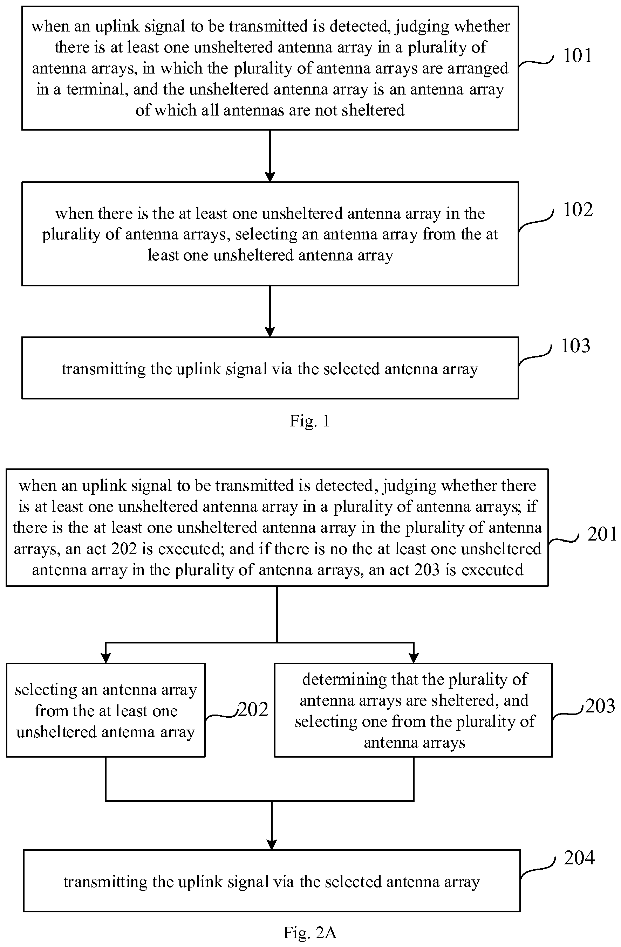

Fig. 1 is a flow chart illustrating a method for transmitting an uplink signal according to an exemplary embodiment. Referring to Fig, 1, the method is applied to a terminal and the method includes followings.

At act 101, when an uplink signal to be transmitted is detected, it is judged whether there is at least one unsheltered antenna array in a plurality of antenna arrays. The plurality of antenna arrays are arranged in the terminal. The unsheltered antenna array refers to an antenna array of which all antennas are not sheltered.

At act 102, when there is the at least one unsheltered antenna array in the plurality of antenna arrays, an antenna array is selected from the at least one unsheltered antenna array.

At act 103, the uplink signal is transmitted via the selected antenna array.

In embodiments of the present invention, when the uplink signal to be transmitted is detected, instead of directly selecting an antenna array from the plurality of antenna arrays as the selected antenna array, by judging whether there is the at least one unsheltered antenna array in the plurality of antenna arrays, and by selecting one of the at least one unsheltered antenna array as the selected antenna array, it may avoid a poor quality of transmitting the uplink signal due to a possibility of selecting a sheltered antenna array as the selected antenna array. That is, the quality of transmitting the uplink signal is enhanced.

In an alternative embodiment, after judging whether there is the at least one unsheltered antenna array in the plurality of antenna arrays when the uplink signal to be transmitted is detected, the method further includes followings.

When there is no the at least one unsheltered antenna array in the plurality of antenna arrays, it is determined that the plurality of antenna arrays are sheltered, in which the sheltered antenna array is an antenna array of which one or more antennas are sheltered. The number of the one or more antennas sheltered in each of the plurality of antenna is determined. And an antenna array with a minimum number is selected from the plurality of antenna arrays as the selected antenna array.

In an alternative embodiment, after the uplink signal is transmitted via the selected antenna array, the method further includes followings.

During a transmission of the uplink signal, it is detected in real time whether there is one or more antennas sheltered in the current selected antenna array for transmitting the uplink signal.

Furthermore, when there is the one or more antennas sheltered in the current selected antenna array for transmitting the uplink signal, another antenna array is reselected from the plurality of antenna arrays, instead of the current selected antenna array, to transmit the uplink signal.

In an alternative embodiment, after the uplink signal is transmitted via the selected antenna array, the method further includes following.

During a transmission of the uplink signal, the number of one or more antennas sheltered in the current selected antenna array for transmitting the uplink signal is detected in real time.

Furthermore, when the number of the one or more antennas sheltered in the current selected antenna array for transmitting the uplink signal is greater than a preset threshold, another antenna array is reselected from the plurality of antenna arrays, instead of the current selected antenna array, to transmit the uplink signal.

In an alternative embodiment, when the uplink signal to be transmitted is detected, judging whether there is the at least one unsheltered antenna array in the plurality of antenna arrays includes following.

A sheltered position of the terminal is determined.

For each of the plurality of antenna arrays, it is judged whether each of locations of antennas in a corresponding antenna array is same as the sheltered position of the terminal.

When the locations of the antennas in the corresponding antenna array are not same as the sheltered position, the corresponding antenna array is determined as the unsheltered antenna array.

In an alternative embodiment, determining the sheltered position of the terminal includes followings.

When it is detected that a first sensor mounted on the terminal is sheltered, a location of the first sensor is determined as the sheltered position of the terminal.

Or, a gesture of the terminal is determined based on a second sensor mounted on the terminal, and the sheltered position is determined based on the gesture of the terminal.

For all alternative technical solutions, any combinations may be made to alternative embodiments of the present invention, which is not elaborated herein.

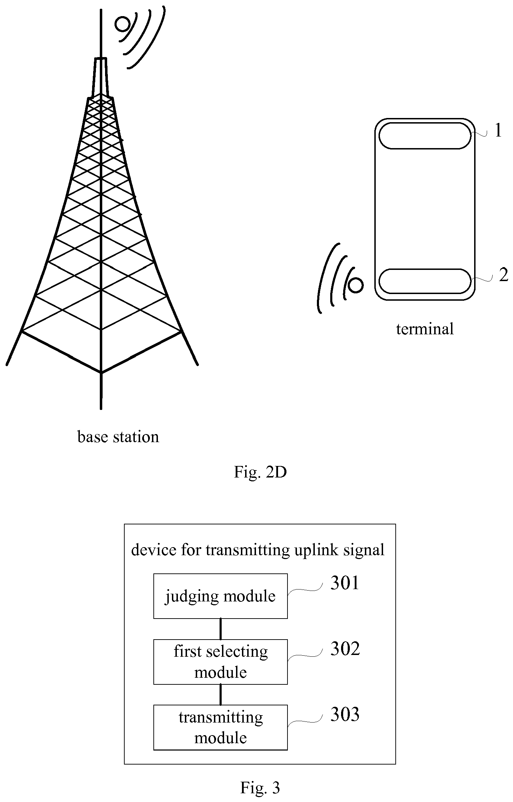

Fig. 2A is a flow chart illustrating a method for transmitting an uplink signal according to an exemplary embodiment. Referring to Fig. 2A, the method is applied to a terminal and the method includes followings.

At act 201, when an uplink signal to be transmitted is detected, it is judged by the terminal whether there is at least one unsheltered antenna array in a plurality of antenna arrays. When there is the at least one unsheltered antenna array in the plurality of antenna arrays, an act 202 is executed. While when there is no the at least one unsheltered antenna array in the plurality of antenna arrays, an act 203 is executed.

As some of the plurality of antenna arrays arranged in the terminal may be sheltered, a quality of transmitting the uplink signal may be poor via the sheltered antenna arrays. Therefore, it is judged whether there is the at least one unsheltered antenna array in the plurality of antenna arrays when the uplink signal to be transmitted is detected, in order to ensure a high quality of transmitting the uplink signal.

The terminal may be a phone. Certainly, in practice, the terminal may be another terminal with a capacity of transmitting the uplink signal.

It is to be illustrated that, the uplink signal is to be sent to a base station by the terminal. Certainly, in practice, the uplink signal may also be a signal sent by the terminal to another device (e.g. a communication satellite) via an antenna array.

It is also to be illustrated that, the plurality of antenna arrays are arranged in the terminal. The unsheltered antenna array refers to an antenna array of which all antennas are not sheltered. Correspondingly, the sheltered antenna array refers to an antenna array of which at least one antenna is sheltered.

A sheltered position of the terminal may be determined by the terminal. For each of the plurality of antenna arrays, it is judged whether each of locations of antennas in a corresponding antenna array is same as the sheltered position of the terminal. When the locations of the antennas in the corresponding antenna array are not same as the sheltered position, it is determined that the corresponding antenna array is the unsheltered antenna array. When the location of the one or more antennas in the corresponding antenna array is same as the sheltered position, it is determined that the corresponding antenna array is the sheltered antenna array.

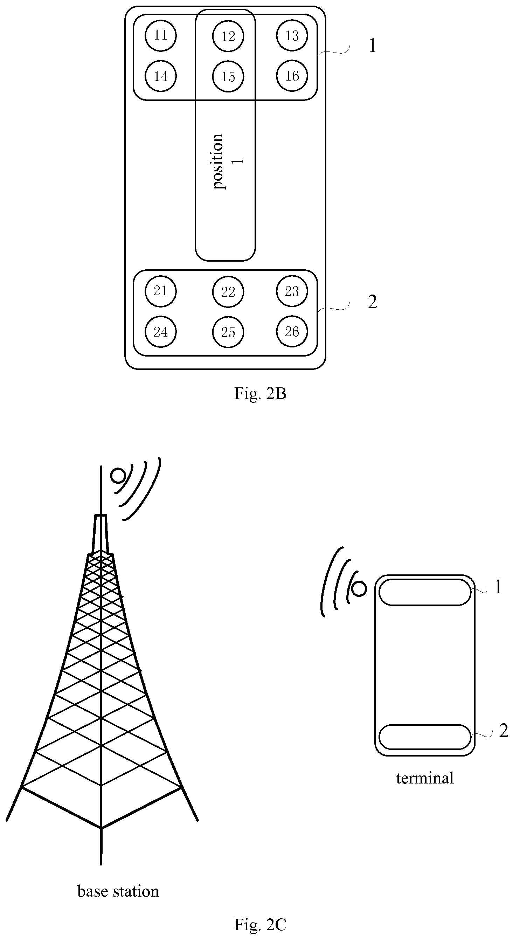

For example, as illustrated in Fig. 2B, two antenna arrays are arranged in the terminal. The two antenna arrays are labeled as 1 and 2 respectively. The antenna array 1 is arranged at the top of a backside of the terminal. The antenna array 1 includes 6 antennas labeled as 11, 12, 13, 14, 15 and 16 respectively. The antenna array 2 is arranged at the bottom of the backside of the terminal. The antenna array 2 includes 6 antennas labeled as 21, 22, 23, 24, 25 and 26 respectively. The sheltered position of the terminal is determined by the terminal and is illustrated as position 1. The location of antenna 12 and the location of antenna 15 are same as the position 1. Therefore, it is determined that the antenna 12 and the antenna 15 are the sheltered antennas. It is thus determined that the antenna array 1 is the sheltered antenna array.

Further, the sheltered position of the terminal may be determined by the terminal in two possible implementations as follows.

A first possible implementation is described. In order to improve an accuracy of determining the sheltered position of the terminal by the terminal, and further to improve an accuracy of selecting an antenna array, and thus to enhance the quality of transmitting the uplink signal, when it is detected that a first sensor arranged on the terminal is sheltered, a location of the first sensor is determined as the sheltered position.

It is to be illustrated that, the first sensor is arranged in advance at the locations of the antennas in the antenna array. The first sensor may be a pressure sensor, an optical sensor, a temperature sensor and the like. Certainly, in practice, the first sensor may be another typed sensor.

Alternatively, in an alternative implementation, the first sensor may be not arranged at the locations of the antennas in the antenna array, but may be arranged at a boundary of the locations of the antennas in the antenna array, or may be arranged close to the locations of the antennas in the antenna array, in order to directly determine the sheltered position via the first sensor.

A second possible implementation is described. Since a gravity sensor or an optical sensor may be generally included in the terminal, a gesture of the terminal may be determined based on these sensors. For example, the gravity sensor or the optical sensor may determine the gesture of the terminal, such as the terminal is placed horizontally and faced upwardly, or the terminal is placed horizontally and faced downwardly, or the terminal is placed vertically, or the like. Therefore, for saving costs and enlarging an application range of the method for transmitting an uplink signal, the gesture of the terminal may be determined based on a second sensor arranged on the terminal. Further, the sheltered position may be determined based on the gesture of the terminal.

The second sensor may include at least one of the gravity sensor and the optical sensor. Certainly, in practice, the second sensor may include another typed sensor.

For example, when the terminal is placed horizontally and faced downwardly, it may be determined that a front side of the terminal is sheltered. When the terminal is placed horizontally and is faced upwardly, it may be determined that the backside of the terminal is sheltered. When the terminal is placed vertically, it is possible that the user is making a call. Generally, it is required to hold the bottom of the terminal by a user's hand when making a call, thus it may be determined that the bottom of the backside of the terminal is sheltered. In practice, according to the gesture of the terminal, other sheltered positions of the terminal may be determined.

At act 202, an antenna array is selected by the terminal from the at least one unsheltered antenna array, and act 204 is executed.

Since there is the at least one unsheltered antenna array in the plurality of antenna arrays, one antenna array may be selected from the at least one unsheltered antenna array by the terminal.

The terminal may select one of at least one unsheltered antenna array in random as the selected antenna array. Certainly, in practice, the terminal may select one of the at least one unsheltered antenna array as the selected antenna array in other manners. For example, one possible implementation is to set priorities for the plurality of antenna arrays. When one antenna array is to be selected from the at least one unsheltered antenna array, an antenna array with a highest priority may be selected from the at least one unsheltered antenna array as the selected antenna array according to a respective priority of each antenna array included in the at least one unsheltered antenna array.

At act 203, it is determined by the terminal that the plurality of antenna arrays are sheltered, and an antenna array is selected by the terminal from the plurality of antenna arrays as the selected antenna array. And act 204 is executed.

Since the plurality of antenna arrays are sheltered, that is there is no the at least one unsheltered antenna array in the plurality of antenna arrays, an antenna array may be selected from the plurality of antenna arrays as the selected antenna array.

Although all antenna arrays are sheltered, the number of one or more antennas sheltered in each of the plurality of antenna arrays is different from each other. Generally, the quality of transmitting the uplink signal via an antenna array with a less number of sheltered antennas is better than that via an antenna array with a more number of sheltered antennas. Therefore, in order to select an optimal antenna array as the selected antenna array, and thus to enhance the quality of transmitting the uplink signal, the number of one or more antennas sheltered in each antenna array may be determined by the terminal, and the antenna array with the minimum number may be selected by the terminal as the selected antenna array.

For example, two antenna arrays are arranged in the terminal. The two antenna arrays are labeled as 1 and 2 respectively. The antenna array 1 and the antenna array 2 are both sheltered. It is determined by the terminal that 3 antennas included in the antenna array 1 are sheltered and 2 antennas included in the antenna array 2 are sheltered. In other words, the antenna array 1 includes 3 sheltered antennas, while the antenna array 2 includes 2 sheltered antennas. Since the number of sheltered antennas in the antenna array 2 is smaller than that in the antenna array 1, thus the antenna array 2 has the minimum number of the sheltered antennas. Therefore, the antenna array 2 is selected as the selected antenna array by the terminal.

At act 204, the uplink signal is transmitted by the terminal via the selected antenna array.

As the antenna array is selected by the terminal, and the selected antenna array is one of the at least one unsheltered antenna array or is the antenna array with the minimum number of sheltered antennas, the quality of transmitting the uplink signal via the selected antenna array is generally better than that via another antenna array. Therefore, the uplink signal may be transmitted via the selected antenna array.

In an embodiment, the terminal may transmit the uplink signal to the base station in a form of wave beams.

During a transmission of the uplink signal by the terminal, a gesture of the terminal may be changed. As a result, the sheltered position of the terminal may be changed. It is thus possible to shelter antennas included in the current selected antenna array for transmitting the uplink signal, thereby weakening the quality of transmitting the uplink signal. Therefore, in order to further ensure the high quality of transmitting the uplink signal, during the transmission of the uplink signal by the terminal, a condition of sheltering the current selected antenna array for transmitting the uplink signal may be detected in real time by the terminal. It may be determined whether another antenna array may be reselected from the plurality of antenna arrays, instead of the current selected antenna array, to transmit the uplink signal, according to the condition of sheltering the current selected antenna array.

During the transmission of the uplink signal by the terminal, another antenna array may be reselected by the terminal from the plurality of antenna arrays by two possible implementations.

A first possible implementation is described. For ensuring the high quality of transmitting the uplink signal as possible, during the transmission of the uplink signal by the terminal, it is detected by the device in real time whether there is one or more antennas sheltered in the current selected antenna array for transmitting the uplink signal. When there is the one or more antennas sheltered in the current selected antenna array for transmitting the uplink signal, another antenna array is reselected from the plurality of antenna arrays, instead of the current selected antenna array, to transmit the uplink signal. When there is no antenna sheltered in the current selected antenna array, that is to say, the current selected antenna array is one of the at least one unsheltered antenna array, the uplink signal is continuously transmitted via the current selected antenna array by the terminal. In other words, as long as one antenna included in the current selected antenna array is sheltered, the other antenna array is reselected from the plurality of antenna arrays, as a replacement of the current selected antenna array, to transmit the uplink signal.

For example, as illustrated in Fig. 2C, during the transmission of the uplink signal via the antenna array 1 arranged at the top of the terminal to the base station, it is detected that antenna 11 included in the antenna array 1 is sheltered. Therefore, the antenna array 2 is selected from the antenna array 1 and the antenna array 2, instead of the antenna array 1, as the selected antenna array. The uplink signal is transmitted via the antenna array 2 arranged at the bottom of the terminal to the base station, as illustrated in 2D.

A second possible implementation is described. Alternatively selecting the selected antenna array among the plurality of antenna arrays to transmit the uplink signal may result in a delay of the uplink signal or other risks. As a result, the quality of transmitting the uplink signal is affected. Therefore, during the transmission of the uplink signal by the terminal, the number of one or more antennas sheltered in the current selected antenna array for transmitting the uplink signal is detected by the terminal in real time. When the number is greater than a preset threshold, another antenna array is reselected from the plurality of antenna arrays, instead of the current selected antenna array, to transmit the uplink signal. When the number is smaller than or equal to the preset threshold, the uplink signal may be transmitted continuously via the current selected antenna array by the terminal. In other words, only the number of the one or more antennas sheltered in the current selected antenna array for transmitting the uplink signal is too much to seriously affect a success rate of transmitting the uplink signal, the current selected antenna array is replaced by the terminal with the other antenna array selected from the plurality of antenna arrays.

Before judging whether the number of the one or more antennas sheltered in the current selected antenna array for transmitting the uplink signal is greater than the preset threshold, the preset threshold is determined. For example, for determining the preset threshold, one possible strategy is to receive a number value input by a user and to determine the value number as the preset threshold. Certainly, in practice, the preset threshold may be determined by the terminal in other ways. In an example, the preset threshold may be a half of the number of the antennas included in each antenna array. Certainly, in practice, the preset threshold may be others.

It is to be illustrated that, selecting the other antenna array from the plurality of antenna arrays by the terminal may be same with selecting the selected antenna array when the uplink signal to be transmitted is detected illustrated as acts 201 to 203, which is not elaborated herein.

For example, when the current selected antenna array is the antenna array 2, during the transmission of the uplink signal via the antenna array 2, it is detected that the antenna 21 and the antenna 22 included in the antenna array 2 are sheltered. When it is determined that the preset threshold is 3, as the number of sheltered antennas in the antenna array is 2 less than 3, the uplink signal is transmitted continuously via the antenna array 2 by the terminal. When it is detected that in addition to the antenna 21 and the antenna 22, the antenna 25 and the antenna 26 are sheltered, as the number of the sheltered antennas in the antenna array 2 is 4 greater than 3, the other antenna array (the antenna array 1) is selected by the terminal from the antenna array 1 and the antenna array 2, instead of the antenna array 2, to transmit the uplink signal.

In embodiments of the present invention, when it is detected that the uplink signal is to be transmitted, instead of directly selecting an antenna array from the plurality of antenna arrays, by judging whether there is the at least one unsheltered antenna array in the plurality of antenna arrays, and by selecting one of the at least one unsheltered antenna array as the selected antenna array if there is the at least one unsheltered antenna array in the plurality of antenna arrays, it may avoid weakening the quality of transmitting the uplink signal due to a possibility of selecting an sheltered antenna array to transmit the uplink signal. That is, the quality of transmitting the uplink signal is enhanced. In addition, when the plurality of antenna arrays are sheltered, an antenna array with the minimum number of one or more antennas sheltered may be selected from the plurality of antenna arrays as the selected antenna array to transmit the uplink signal. Therefore, the quality of transmitting the uplink signal is further enhanced. Furthermore, during the transmission of the uplink signal by the terminal, it may be detected by the terminal in real time whether there is one or more antennas sheltered in the current selected antenna array. It may be determined whether to select the other antenna array to transmit the uplink signal according to a sheltered condition of the current selected antenna array, thereby further enhancing the quality of transmitting the uplink signal.

Fig. 3 is a block diagram illustrating a device for transmitting an uplink signal according to an exemplary embodiment. Referring to Fig. 3, the device includes a judging module 301, a first selecting module 302 and a transmitting module 303.

The judging module 301 is configured to, when an uplink signal to be transmitted is detected, judge whether there is at least one unsheltered antenna array in a plurality of antenna arrays. The plurality of antenna arrays are arranged in a terminal. The unsheltered antenna array is an antenna array of which all antennas are not sheltered.

The first selecting module 302 is configured to, when there is the at least one unsheltered antenna array in the plurality of antenna arrays, select an antenna array from the at least one unsheltered antenna array.

The transmitting module 303 is configured to transmit the uplink signal via the selected antenna array.

In an alternative embodiment, the device further includes a first determining module, a second determining module and a second selecting module.

The first determining module is configured to, when there is no the at least one unsheltered antenna array in the plurality of antenna arrays, determine that the plurality of antenna arrays are sheltered. The sheltered antenna array is an antenna array of which one or more antennas are sheltered.

The second determining module is configured to determine the number of the one or more antennas sheltered in each of the plurality of antenna arrays.

The second selecting module is configured to select an antenna array with a minimum number from the plurality of antenna arrays as the selected antenna array.

In an alternative embodiment, the device further includes a first detecting module and a third selecting module.

The first detecting module is configured to, during a transmission of the uplink signal, detect in real time whether there is one or more antennas sheltered in the current selected antenna array for transmitting the uplink signal.

The third selecting module is configured to, when there is the one or more antennas sheltered in the current selected antenna array for transmitting the uplink signal, reselect another antenna array from the plurality of antenna arrays, instead of the current selected antenna array, to transmit the uplink signal.

In an alternative embodiment, the device further includes a second detecting module and a fourth selecting module.

The second detecting module is configured to, during a transmission of the uplink signal, detect in real time the number of one or more antennas sheltered in the current selected antenna array for transmitting the uplink signal.

The fourth selecting module is configured to, when the number is greater than a preset threshold, reselect another antenna array from the plurality of antenna arrays, instead of the current selected antenna array, to transmit the uplink signal.

In an alternative embodiment, the judging module further includes a first determining sub-module, a judging sub-module and a second determining sub-module.

The first determining sub-module is configured to determine a sheltered position of the terminal.

The judging sub-module is configured to, for each of the plurality of antenna arrays, judge whether each of locations of antennas in a corresponding antenna array is same as the sheltered position.

The second determining sub-module is configured to, when the locations of the antennas in the corresponding antenna array are not same as the sheltered position, determine the corresponding antenna array as the unsheltered antenna array.

In an alternative embodiment, the first determining sub-module is configured to when it is detected that a first sensor mounted on the terminal is sheltered, determine a location of the first sensor as the sheltered position. Alternatively, the first determining sub-module is configured to determine a gesture of the terminal based on a second sensor mounted on the terminal, and determine the sheltered position based on the gesture.

In embodiments of the present invention, when the uplink signal to be transmitted is detected, instead of directly selecting an antenna array from the plurality of antenna arrays as the selected antenna array, by judging whether there is the at least one unsheltered antenna array in the plurality of antenna arrays, and by selecting one of the at least one unsheltered antenna as the selected antenna array to transmit the uplink signal, it avoids a poor quality of transmitting the uplink signal due to a possibility of selecting an sheltered antenna array as the selected antenna array. Therefore, the quality of transmitting the uplink signal is enhanced.

Regarding to the device described in above embodiments, detailed operation manners of each module has been described in detail in corresponding method embodiments, which is not elaborated herein.

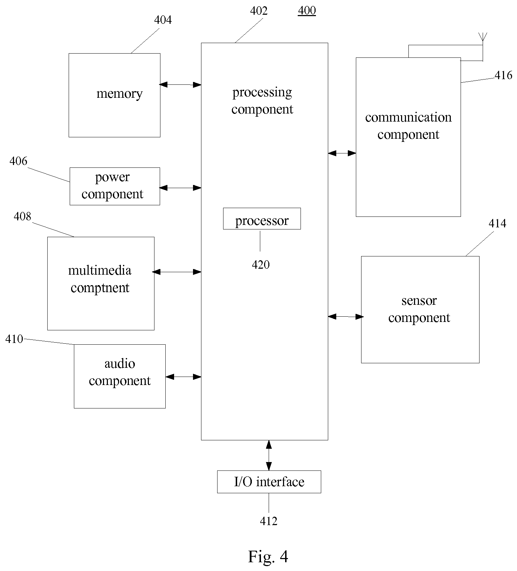

Fig. 4 is a schematic diagram illustrating an apparatus 400 for transmitting an uplink signal according to an exemplary embodiment. For example, the apparatus 400 may be a mobile phone, a messaging device, a tablet device, a Personal Digital Assistant PDA, and the like.

Referring to Fig. 4, the apparatus 400 may include the following one or more components: a processing component 402, a memory 404, a power component 406, a multimedia component 408, an audio component 410, an Input/Output (I/O) interface 412, a sensor component 414, and a communication component 416.

The processing component 402 typically controls overall operations of the apparatus 400, such as the operations associated with display, telephone calls, data communications, camera operations, and recording operations. The processing component 402 may include one or more processors 420 to execute instructions to perform all or part of the acts in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the apparatus 400. Examples of such data include instructions for any applications or methods operated on the apparatus 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the apparatus 400. The power component 406 may include a power management system, one or more power sources, and any other components associated with the generation, management, and distribution of power in the apparatus 400.

The multimedia component 408 includes a screen providing an output interface between the apparatus 400 and the user. In some embodiments, the screen may include a liquid crystal display (LCD) and a press panel (TP). If the screen includes the touchable panel, the screen may be implemented as a touch screen to receive input signals from the user. The touchable panel includes one or more touch sensors to sense touches, swipes, and other gestures on the touchable panel. The touch sensors may not only sense a boundary of a touch or swipe action, but also sense a duration time and a pressure associated with the touch or swipe action. In some embodiments, the multimedia component 408 includes a front camera and/or a rear camera. The front camera and/or the rear camera may receive external multimedia data while the apparatus 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the apparatus 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface for the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the apparatus 400. For instance, the sensor component 414 may detect an open/closed status of the apparatus 400 and relative positioning of components (e.g. the display and the keypad of the apparatus 400). The sensor component 414 may also detect a change in position of the apparatus 400 or of a component in the apparatus 400, a presence or absence of user contact with the 400, an orientation or an acceleration/deceleration of the apparatus 400, and a change in temperature of the apparatus 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate wired or wireless communication between the apparatus 400 and other apparatuses. The apparatus 400 can access a wireless network based on a communication standard, such as WIFI, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the method for transmitting an uplink signal.

In exemplary embodiments, there is also provided a non-transitory computer readable storage medium having instructions, such as the memory 404 including instructions. The instructions may be executed by the processors 420 of the apparatus 400 to perform the above method for transmitting an uplink signal. For example, the non-transitory computer-readable storage medium may be a ROM, a RAM, a CD-ROM, a magnetic tape, a floppy disc, an optical data storage device, and the like.

There is provided a non-transitory computer readable storage medium, when instructions stored therein are executed by a processor of a mobile terminal, causing the mobile terminal to perform a method for transmitting an uplink signal. The method includes following.

When an uplink signal to be transmitted is detected, it is judged whether there is at least one unsheltered antenna array in a plurality of antenna arrays. The plurality of antenna arrays are arranged in a terminal. The unsheltered antenna array is an antenna array of which all antennas are not sheltered.

When there is the at least one unsheltered antenna array in the plurality of antenna arrays, an antenna array is selected from the at least one unsheltered antenna array as a selected antenna array.

The uplink signal is transmitted via the selected antenna array.

In an alternative embodiment, after judging whether there is the at least one unsheltered antenna array in the plurality of antenna arrays when the uplink signal to be transmitted is detected, the method further includes followings.

When there is no the at least one unsheltered antenna array in the plurality of antenna arrays, it is determined that the plurality of antenna arrays are sheltered. The sheltered antenna array is an antenna array of which one or more antennas are sheltered.

The number of the one or more antennas sheltered in each of the plurality of antenna arrays is determined.

An antenna array with a minimum number is selected from the plurality of antenna arrays as the selected antenna array.

In an alternative embodiment, after transmitting the uplink signal via the selected antenna array, the method further includes followings.

During a transmission of the uplink signal, it is detected in real time whether there is one or more antennas sheltered in the current selected antenna array for transmitting the uplink signal.

When there is the one or more antennas sheltered in the current selected antenna array for transmitting the uplink signal, another antenna array is reselected from the plurality of antenna arrays, instead of the current selected antenna array, to transmit the uplink signal.

In an alternative embodiment, after transmitting the uplink signal via the selected antenna array, the method further includes followings.

During a transmission of the uplink signal, the number of one or more antennas sheltered in the current selected antenna array is detected in real time.

When the number is greater than a preset threshold, another antenna array is reselected from the plurality of antenna arrays, instead of the current selected antenna array, to transmit the uplink signal.

In an alternative embodiment, when an uplink signal to be sent is detected, judging whether there is at least one unsheltered antenna array in a plurality of antenna arrays include at least one unsheltered antenna array includes followings.

A sheltered position of the terminal is determined.

For each of the plurality of antenna arrays, it is judged whether each of locations of antennas in a corresponding antenna array is same as the sheltered position.

When the locations of the antennas in the corresponding antenna array are not same as the sheltered position, the corresponding antenna array is determined as the unsheltered antenna array.

In an alternative embodiment, determining a sheltered position of the terminal includes followings.

When it is detected that a first sensor mounted on the terminal is sheltered, a location of the first sensor is determined as the sheltered position.

Alternatively, a gesture of the terminal is determined based on a second sensor mounted on the terminal, and the sheltered position is determined based on the gesture.

In embodiments of the present invention, when the uplink signal to be transmitted is detected, instead of directly selecting an antenna array from the plurality of antenna arrays as the selected antenna array, by judging whether there is the at least one unsheltered antenna array in the plurality of antenna arrays, and by selecting one of the at least one unsheltered antenna as the selected antenna array to transmit the uplink signal, it avoids a poor quality of transmitting the uplink signal due to a possibility of selecting an sheltered antenna array as the selected antenna array. Therefore, the quality of transmitting the uplink signal is enhanced.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

## Claims

1. A method for transmitting an uplink signal, comprising:
when an uplink signal to be transmitted is detected, judging whether there is at least one unsheltered antenna array (2) in a plurality of antenna arrays (1, 2), wherein the plurality of antenna arrays (1, 2) are arranged in a terminal, and the unsheltered antenna array (2) is an antenna array of which all antennas (21 - 26) are not sheltered;
when it is judged that there is at least one unsheltered antenna array (2) in the plurality of antenna arrays (1, 2), selecting an antenna array (2) from the at least one unsheltered antenna array (2); and
transmitting the uplink signal via the selected antenna array (2),
**characterized in that**
after judging whether there is at least one unsheltered antenna array (2) in a plurality of antenna arrays (1, 2) when an uplink signal to be transmitted is detected, further comprising:
when it is judged that there is no unsheltered antenna array in the plurality of antenna arrays (1, 2), determining that the plurality of antenna arrays (1, 2) are sheltered, wherein the sheltered antenna array is an antenna array of which one or more antennas are sheltered;
determining the number of the one or more antennas sheltered in each of the plurality of antenna arrays (1, 2); and
selecting an antenna array with a minimum number from the plurality of antenna arrays as the selected antenna array.

2. The method according to claim 1, after judging that there is no unsheltered antenna array in the plurality of antenna arrays (1, 2) and transmitting the uplink signal via the selected antenna array, further comprising:
during a transmission of the uplink signal, detecting in real time the number of one or more antennas sheltered in the current selected antenna array for transmitting the uplink signal; and
when the detected number is greater than a preset threshold, reselecting another antenna array from the plurality of antenna arrays (1, 2), instead of the current selected antenna array, to transmit the uplink signal.

3. The method according to any one of the preceding claims, after judging that there is at least one unsheltered antenna array (2) in the plurality of antenna arrays (1, 2) and transmitting the uplink signal via the selected antenna array, further comprising:
during a transmission of the uplink signal, detecting in real time whether there are one or more antennas sheltered in the current selected antenna array for transmitting the uplink signal; and
when it is detected that one or more antennas are sheltered in the current selected antenna array for transmitting the uplink signal, reselecting another antenna array from the plurality of antenna arrays (1, 2), instead of the current selected antenna array, to transmit the uplink signal.

4. The method according to any one of claims 1 to 3, wherein judging whether there is at least one unsheltered antenna array in a plurality of antenna arrays comprises:
determining a sheltered position of the terminal;
for each of the plurality of antenna arrays (1, 2), judging whether each of locations of antennas (11-16, 21-26) in a corresponding antenna array is same as the sheltered position; and
when the locations of the antennas in the corresponding antenna array are not same as the sheltered position, determining the corresponding antenna array as the unsheltered antenna array.

5. The method according to claim 4, wherein determining a sheltered position of the terminal comprises:
when it is detected that a first sensor mounted on the terminal is sheltered, determining a location of the first sensor as the sheltered position; and/or
determining a gesture of the terminal based on a second sensor mounted on the terminal, and determining the sheltered position based on the gesture.

6. A device for transmitting an uplink signal, comprising:
a judging module (301), configured to, when an uplink signal to be transmitted is detected, judge whether there is at least one unsheltered antenna array in a plurality of antenna arrays (1, 2), wherein the plurality of antenna arrays are arranged in a terminal, and the unsheltered antenna array is an antenna array of which all antennas are not sheltered;
a first selecting module (302), configured to, when there is the at least one unsheltered antenna array in the plurality of antenna arrays (1, 2), select an antenna array from the at least one unsheltered antenna array; and
a transmitting module (303), configured to transmit the uplink signal via the selected antenna array
**characterized by** further comprising:
a first determining module, configured to, when it is judged by the judging module (301) that there is no unsheltered antenna array in the plurality of antenna arrays (1, 2), determine that the plurality of antenna arrays are sheltered, wherein the sheltered antenna array is an antenna array of which one or more antennas are sheltered;
a second determining module, configured to determine the number of the one or more antennas sheltered in each of the plurality of antenna arrays; and
a second selecting module, configured to select an antenna array with a minimum number from the plurality of antenna arrays as the selected antenna array.

7. The device according to claim 6, further comprising:
a second detecting module, configured to, during a transmission of the uplink signal, when it is judged by the judging module (301) that there is no unsheltered antenna array in the plurality of antenna arrays (1, 2), detect in real time the number of one or more antennas sheltered in the current selected antenna array for transmitting the uplink signal; and
a fourth selecting module, configured to, when the number is greater than a preset threshold, reselect another antenna array from the plurality of antenna arrays (1, 2), instead of the current selected antenna array, to transmit the uplink signal.

8. The device according to any one of claims 6 to 7, further comprising:
a first detecting module, configured to, during a transmission of the uplink signal, when it is judged by the judging module (301) that there is at least one unsheltered antenna array in the plurality of antenna arrays (1, 2), detect in real time whether there are one or more antennas sheltered in the current selected antenna array for transmitting the uplink signal; and
a third selecting module, configured to, when it is detected by the first detecting module that there are one or more antennas sheltered in the current selected antenna array for transmitting the uplink signal, reselect another antenna array from the plurality of antenna arrays (1, 2), instead of the current selected antenna array, to transmit the uplink signal.

9. The device according to any one of claims 6 to 8, wherein the judging module (301) comprises:
a first determining sub-module, configured to determine a sheltered position of the terminal;
a judging sub-module, configured to, for each of the plurality of antenna arrays, judge whether each of locations of antennas in a corresponding antenna array is same as the sheltered position; and
a second determining sub-module, configured to, when the locations of the antennas in the corresponding antenna array are not same as the sheltered position, determine the corresponding antenna array as the unsheltered antenna array.

10. The device according to claim 9, wherein the first determining sub-module is configured to:
when it is detected that a first sensor mounted on the terminal is sheltered, determine a location of the first sensor as the sheltered position; and/or
determine a gesture of the terminal based on a second sensor mounted on the terminal, and determine the sheltered position based on the gesture.

11. An apparatus for transmitting an uplink signal, comprising:
a processor; and
a memory configured to store an instruction executable by the processor;
wherein the processor is configured to perform the method according to any one of claims 1 to 5.

12. A non-transitory computer-readable storage medium having stored therein instructions that, when executed by a processor of a device, causes the device to perform the method according to any one of claims 1 to 5.

## Patentansprüche

1. Verfahren zur Übertragung eines Uplink-Signals, umfassend:
wenn ein zu übertragendes Uplink-Signal detektiert wird, Beurteilen, ob es mindestens eine ungeschützte Antennenanordnung (2) in einer Vielzahl von Antennenanordnungen (1, 2) gibt, wobei die Vielzahl von Antennenanordnungen (1, 2) in einem Terminal angeordnet sind und die ungeschützte Antennenanordnung (2) eine Antennenanordnung ist, von der alle Antennen (21 - 26) ungeschützt sind;
wenn beurteilt wird, dass es mindestens eine ungeschützte Antennenanordnung (2) in der Vielzahl von Antennenanordnungen (1, 2) gibt, Auswählen einer Antennenanordnung (2) aus der mindestens einen ungeschützten Antennenanordnung (2); und
Übertragen des Uplink-Signals über die ausgewählte Antennenanordnung (2),
**dadurch gekennzeichnet, dass**
das Verfahren nach dem Beurteilen, ob es mindestens eine ungeschützte Antennenanordnung (2) in einer Vielzahl von Antennenanordnungen (1, 2) gibt, wenn ein zu übertragendes Uplink-Signal detektiert wird, ferner umfasst:
wenn beurteilt wird, dass es in der Vielzahl von Antennenanordnungen (1, 2) keine ungeschützte Antennenanordnung gibt, Bestimmen, dass die Vielzahl von Antennenanordnungen (1, 2) geschützt sind, wobei die geschützte Antennenanordnung eine Antennenanordnung ist, von der eine oder mehrere Antennen geschützt sind;
Bestimmen der Anzahl der einen oder mehreren Antennen, die in jeder der Vielzahl von Antennenanordnungen (1, 2) geschützt sind; und
Auswählen einer Antennenanordnung mit einer minimalen Anzahl aus der Vielzahl von Antennenanordnungen als die ausgewählte Antennenanordnung.

2. Verfahren nach Anspruch 1, wobei das Verfahren nach dem Beurteilen, dass es in der Vielzahl von Antennenanordnungen (1, 2) keine ungeschützte Antennenanordnung gibt, und dem Übertragen des Uplink-Signals über die ausgewählte Antennenanordnung, ferner umfasst:
während einer Übertragung des Uplink-Signals, Detektieren der Anzahl einer oder mehrerer Antennen, die in der aktuell ausgewählten Antennenanordnung zur Übertragung des Uplink-Signals geschützt sind, in Echtzeit; und
wenn die detektierte Zahl größer als ein voreingestellter Schwellenwert ist, Wiederauswählen einer anderen Antennenanordnung aus der Vielzahl von Antennenanordnungen (1, 2) anstelle der aktuell ausgewählten Antennenanordnung, um das Uplink-Signal zu senden.

3. Verfahren nach einem der vorhergehenden Ansprüche, wobei das Verfahren nach dem Beurteilen, dass es in der Vielzahl von Antennenanordnungen (1, 2) mindestens eine ungeschützte Antennenanordnung (2) gibt, und dem Übertragen des Uplink-Signals über die ausgewählte Antennenanordnung, ferner umfasst:
während einer Übertragung des Uplink-Signals, Detektieren in Echtzeit, ob eine oder mehrere Antennen in der aktuell ausgewählten Antennenanordnung zur Übertragung des Uplink-Signals geschützt sind; und
wenn detektiert wird, dass eine oder mehrere Antennen in der aktuell ausgewählten Antennenanordnung zur Übertragung des Uplink-Signals geschützt sind, Wiederauswählen einer anderen Antennenanordnung aus der Vielzahl von Antennenanordnungen (1, 2) anstelle der aktuell ausgewählten Antennenanordnung, um das Uplink-Signal zu übertragen.

4. Verfahren nach einem der Ansprüche 1 bis 3, wobei das Beurteilen, ob es mindestens eine ungeschützte Antennenanordnung in einer Vielzahl von Antennenanordnungen gibt, umfasst:
Bestimmen einer geschützten Position des Terminals;
Beurteilen für jede der Vielzahl von Antennenanordnungen (1, 2), ob jede der Positionen von Antennen (11-16, 21-26) in einer entsprechenden Antennenanordnung gleich der geschützten Position ist; und;
wenn die Positionen der Antennen in der entsprechenden Antennenanordnung nicht mit der geschützten Position übereinstimmen, Bestimmen der entsprechenden Antennenanordnung als die ungeschützte Antennenanordnung.

5. Verfahren nach Anspruch 4, wobei das Bestimmen einer geschützten Position des Terminals umfasst:
wenn erkannt wird, dass ein erster Sensor, der an dem Terminal angebracht ist, geschützt ist, Bestimmen einer Position des ersten Sensors als geschützte Position; und/oder
Bestimmen einer Geste bzw. Bewegung des Terminals basierend auf einem zweiten Sensor, der auf dem Terminal angebracht ist, und Bestimmen der geschützten Position basierend auf der Geste bzw. Bewegung.

6. Vorrichtung zur Übertragung eines Uplink-Signals, umfassend:
ein Beurteilungsmodul (301), das eingerichtet ist, wenn ein zu übertragendes Uplink-Signal detektiert wird, zu beurteilen, ob es mindestens eine ungeschützte Antennenanordnung in einer Vielzahl von Antennenanordnungen (1, 2) gibt, wobei die Vielzahl von Antennenanordnungen in einem Terminal angeordnet sind und die ungeschützte Antennenanordnung eine Antennenanordnung ist, von der alle Antennen nicht geschützt sind;
ein erstes Auswahlmodul (302), das eingerichtet ist, wenn es die mindestens eine ungeschützte Antennenanordnung in der Vielzahl von Antennenanordnungen (1, 2) gibt, eine Antennenanordnung aus der mindestens einen ungeschützten Antennenanordnung auszuwählen; und
ein Übertragungsmodul (303), das eingerichtet ist, das Uplink-Signal über die ausgewählte Antennenanordnung zu übertragen
**dadurch gekennzeichnet, dass** die Vorrichtung ferner umfasst:
ein erstes Bestimmungsmodul, das eingerichtet ist, wenn durch das Beurteilungsmodul (301) beurteilt wird, dass es in der Vielzahl von Antennenanordnungen (1, 2) keine ungeschützte Antennenanordnung gibt, zu bestimmen, dass die Vielzahl von Antennenanordnungen geschützt sind, wobei die geschützte Antennenanordnung eine Antennenanordnung ist, von der eine oder mehrere Antennen geschützt sind;
ein zweites Bestimmungsmodul, das eingerichtet ist, die Anzahl der einen oder mehreren Antennen zu bestimmen, die in jeder der Vielzahl von Antennenanordnungen geschützt sind; und
ein zweites Auswahlmodul, das eingerichtet ist, eine Antennenanordnung mit einer minimalen Anzahl aus der Vielzahl von Antennenanordnungen als die ausgewählte Antennenanordnung auszuwählen.

7. Vorrichtung nach Anspruch 6, ferner umfassend:
ein zweites Detektionsmodul, das eingerichtet ist, während einer Übertragung des Uplink-Signals, wenn von dem Beurteilungsmodul (301) beurteilt wird, dass es keine ungeschützte Antennenanordnung in der Vielzahl von Antennenanordnungen (1, 2) gibt, in Echtzeit die Anzahl einer oder mehrerer Antennen zu detektieren, die in der aktuell ausgewählten Antennenanordnung zur Übertragung des Uplink-Signals geschützt sind; und
ein viertes Auswahlmodul, das eingerichtet ist, wenn die Anzahl größer als ein voreingestellter Schwellenwert ist, eine andere Antennenanordnung aus der Vielzahl von Antennenanordnungen (1, 2) anstelle der aktuell ausgewählten Antennenanordnung wieder auszuwählen, um das Uplink-Signal zu übertragen.

8. Die Vorrichtung nach einem der Ansprüche 6 bis 7, ferner umfassend:
ein erstes Detektionsmodul, das eingerichtet ist, während einer Übertragung des Uplink-Signals, wenn durch das Beurteilungsmodul (301) beurteilt wird, dass es mindestens eine ungeschützte Antennenanordnung in der Vielzahl von Antennenanordnungen (1, 2) gibt, in Echtzeit zu detektieren, ob es eine oder mehrere Antennen gibt, die in der aktuell ausgewählten Antennenanordnung zur Übertragung des Uplink-Signals geschützt sind; und
ein drittes Auswahlmodul, das eingerichtet ist, wenn durch das erste Detektionsmodul detektiert wird, dass eine oder mehrere Antennen in der aktuell ausgewählten Antennenanordnung zur Übertragung des Uplink-Signals geschützt sind, eine andere Antennenanordnung aus der Vielzahl von Antennenanordnungen (1, 2) anstelle der aktuell ausgewählten Antennenanordnung wieder auszuwählen, um das Uplink-Signal zu übertragen.

9. Die Vorrichtung nach einem der Ansprüche 6 bis 8, wobei das Beurteilungsmodul (301) umfasst:
ein erstes Bestimmungs-Untermodul, das eingerichtet ist, eine geschützte Position des Terminals zu bestimmen;
ein Beurteilungs-Untermodul, das eingerichtet ist, für jede der Vielzahl von Antennenanordnungen zu beurteilen, ob jede der Positionen von Antennen in einer entsprechenden Antennenanordnung gleich der geschützten Position ist; und
ein zweites Bestimmungs-Untermodul, das eingerichtet ist, wenn die Positionen der Antennen in der entsprechenden Antennenanordnung nicht mit der geschützten Position übereinstimmen, die entsprechende Antennenanordnung als die ungeschützte Antennenanordnung zu bestimmen.

10. Die Vorrichtung nach Anspruch 9, wobei das erste Bestimmungs-Untermodul eingerichtet ist:
wenn detektiert wird, dass ein erster Sensor, der an dem Terminal angebracht ist, geschützt ist, Bestimmen einer Position des ersten Sensors als geschützte Position; und/oder
Bestimmen einer Geste bzw. Bewegung des Terminals basierend auf einem zweiten Sensor, der auf dem Terminal angebracht ist, und Bestimmen der geschützten Position basierend auf der Geste bzw. Bewegung.

11. Vorrichtung zur Übertragung eines Uplink-Signals, umfassend:
einen Prozessor; und
einen Speicher, der eingerichtet ist, eine vom Prozessor ausführbare Anweisung zu speichern;
wobei der Prozessor eingerichtet ist, das Verfahren nach einem der Ansprüche 1 bis 5 durchzuführen.

12. Nichtflüchtiges, computerlesbares Speichermedium auf dem Anweisungen gespeichert sind, die, wenn sie von einem Prozessor einer Vorrichtung ausgeführt werden, bewirken, dass die Vorrichtung das Verfahren nach einem der Ansprüche 1 bis 5 durchführt.

## Revendications

1. Procédé de transmission d'un signal de liaison montante, comportant les étapes consistant à :
lorsqu'un signal de liaison montante à transmettre est détecté, juger s'il y a au moins un réseau d'antennes non abritées (2) dans une pluralité de réseaux d'antennes (1, 2), dans lequel les antennes de la pluralité de réseaux d'antennes (1, 2) sont agencées dans un terminal, et le réseau d'antennes non abritées (2) est un réseau d'antennes dont la totalité des antennes (21 à 26) ne sont pas abritées ;
lorsqu'il est jugé qu'il y a au moins un réseau d'antennes non abritées (2) dans la pluralité de réseaux d'antennes (1, 2), sélectionner un réseau d'antennes (2) parmi le au moins un réseau d'antennes non abritées (2) ; et
transmettre le signal de liaison montante via le réseau d'antennes (2) sélectionné,
**caractérisé en ce que**
après avoir jugé s'il y a au moins un réseau d'antennes non abritées (2) dans une pluralité de réseaux d'antennes (1, 2) lorsqu'un signal de liaison montante à transmettre est détecté, le procédé comportant en outre les étapes consistant à :
lorsqu'il est jugé qu'il n'y a aucun réseau d'antennes non abritées (2) dans la pluralité de réseaux d'antennes (1, 2), déterminer que les antennes de la pluralité de réseaux d'antennes (1, 2) sont abritées, dans lequel le réseau d'antennes abritées est un réseau d'antennes dont une ou plusieurs antennes sont abritées ;
déterminer le nombre de la ou des antennes abritées dans chaque réseau de la pluralité de réseaux d'antennes (1, 2) ; et
sélectionner un réseau d'antennes avec un nombre minimal parmi la pluralité de réseaux d'antennes comme étant le réseau d'antennes sélectionné.

2. Procédé selon la revendication 1, après avoir jugé qu'il n'y a aucun réseau d'antennes non abritées dans la pluralité de réseaux d'antennes (1, 2) et après la transmission du signal de liaison montante via le réseau d'antennes sélectionné, comportant en outre les étapes consistant à :
pendant une transmission du signal de liaison montante, détecter en temps réel le nombre de la ou des antennes abritées dans le réseau d'antennes actuel sélectionné pour transmettre le signal de liaison montante ; et
lorsque le nombre détecté est supérieur à un seuil prédéfini, resélectionner un autre réseau d'antennes parmi la pluralité de réseaux d'antennes (1, 2), à la place du réseau d'antennes actuel sélectionné, pour transmettre le signal de liaison montante.

3. Procédé selon l'une quelconque des revendications précédentes, après avoir jugé qu'il y a au moins un réseau d'antennes non abritées (2) dans la pluralité de réseaux d'antennes (1, 2) et après la transmission du signal de liaison montante via le réseau d'antennes sélectionné, comportant en outre les étapes consistant à :
pendant une transmission du signal de liaison montante, détecter en temps réel s'il y a une ou plusieurs antennes abritées dans le réseau d'antennes actuel sélectionné pour transmettre le signal de liaison montante ; et
lorsqu'il est détecté que la ou les antennes sont abritées dans le réseau d'antennes actuel sélectionné pour transmettre le signal de liaison montante, resélectionner un autre réseau d'antennes parmi la pluralité de réseaux d'antennes (1, 2), à la place du réseau d'antennes actuel sélectionné, pour transmettre le signal de liaison montante.

4. Procédé selon l'une quelconque des revendications 1 à 3, dans lequel le fait de juger s'il y a au moins un réseau d'antennes non abritées dans une pluralité de réseaux d'antennes comporte les étapes consistant à :
déterminer une position abritée du terminal ;
pour chaque réseau de la pluralité de réseaux d'antennes (1, 2), juger si chacun des emplacements d'antennes (11-16, 21-26) dans un réseau d'antennes correspondant est identique à la position abritée ; et
lorsque les emplacements des antennes dans le réseau d'antennes correspondant ne sont pas les mêmes que la position abritée, déterminer le réseau d'antennes correspondant comme étant le réseau d'antennes non abritées.

5. Procédé selon la revendication 4, dans lequel la détermination d'une position abritée du terminal comporte les étapes consistant à :
lorsqu'il est détecté qu'un premier capteur monté sur le terminal est abrité, déterminer un emplacement du premier capteur comme étant la position abritée ; et/ou
déterminer un geste du terminal sur la base d'un second capteur monté sur le terminal, et déterminer la position abritée sur la base du geste.

6. Dispositif pour transmettre un signal de liaison montante, le dispositif comportant :
un module de jugement (301), configuré pour, lorsqu'un signal de liaison montante à transmettre est détecté, juger s'il y a au moins un réseau d'antennes non abritées dans une pluralité de réseaux d'antennes (1, 2), dans lequel les antennes de la pluralité de réseaux d'antennes sont agencées dans un terminal, et le réseau d'antennes non abritées est un réseau d'antennes dont la totalité des antennes ne sont pas abritées ;
un premier module de sélection (302), configuré pour, lorsqu'il y a le au moins un réseau d'antennes non abritées dans la pluralité de réseaux d'antennes (1, 2), sélectionner un réseau d'antennes parmi le au moins un réseau d'antennes non abritées ; et
un module de transmission (303), configuré pour transmettre le signal de liaison montante via le réseau d'antennes sélectionné
**caractérisé en ce qu'**il comporte en outre :
un premier module de détermination, configuré pour, lorsqu'il est jugé par le module de jugement (301) qu'il n'y aucun réseau d'antennes non abritées dans la pluralité de réseaux d'antennes (1, 2), déterminer que les antennes de la pluralité de réseaux d'antennes sont abritées, dans lequel le réseau d'antennes abritées est un réseau d'antennes dont une ou plusieurs antennes sont abritées ;
un second module de détermination, configuré pour déterminer le nombre de la ou des antennes abritées dans chaque réseau de la pluralité de réseaux d'antennes ; et
un seconde module de sélection, configuré pour sélectionner un réseau d'antennes avec un nombre minimal parmi la pluralité de réseaux d'antennes comme étant le réseau d'antennes sélectionné.

7. Dispositif selon la revendication 6, comportant en outre :
un second module de détection, configuré pour, pendant une transmission du signal de liaison montante, lorsqu'il est jugé par le module de jugement (301) qu'il n'y a aucun réseau d'antennes non abritées dans la pluralité de réseaux d'antennes (1, 2), détecter en temps réel le nombre de la ou des antennes abritées dans le réseau d'antennes actuel sélectionné pour transmettre le signal de liaison montante ; et
un quatrième module de sélection, configuré pour, lorsque le nombre est supérieur à un seuil prédéfini, resélectionner un autre réseau d'antennes parmi la pluralité de réseaux d'antennes (1, 2), à la place du réseau d'antennes actuel sélectionné, pour transmettre le signal de liaison montante.

8. Dispositif selon l'une quelconque des revendications 6 à 7, comportant en outre :
un premier module de détection, configuré pour, pendant une transmission du signal de liaison montante, lorsqu'il est jugé par le module de jugement (301) qu'il y a au moins un réseau d'antennes non abritées dans la pluralité de réseaux d'antennes (1, 2), détecter en temps réel s'il y a une ou plusieurs antennes abritées dans le réseau d'antennes actuel sélectionné pour transmettre le signal de liaison montante ; et
un troisième module de sélection, configuré pour, lorsqu'il est détecté par le premier module de détection qu'il y a une ou plusieurs antennes abritées dans le réseau d'antennes actuel sélectionné pour transmettre le signal de liaison montante, resélectionner un autre réseau d'antennes parmi la pluralité de réseaux d'antennes (1, 2), à la place du réseau d'antennes actuel sélectionné, pour transmettre le signal de liaison montante.

9. Dispositif selon l'une quelconque des revendications 6 à 8, dans lequel le module de jugement (301) comporte :
un premier sous-module de détermination, configuré pour déterminer une position abritée du terminal ;
un sous-module de jugement, configuré pour, pour chaque réseau de la pluralité de réseaux d'antennes, juger si chacun des emplacements d'antennes dans un réseau d'antennes correspondant est le même que la position abritée ; et
un second sous-module de détermination, configuré pour, lorsque les emplacements des antennes dans le réseau d'antennes correspondant ne sont pas les mêmes que la position abritée, déterminer le réseau d'antennes correspondant comme étant le réseau d'antennes non abritées.

10. Dispositif selon la revendication 9, dans lequel le premier sous-module de détermination est configuré pour :
lorsqu'il est détecté qu'un premier capteur monté sur le terminal est abrité, déterminer un emplacement du premier capteur comme étant la position abritée ; et/ou
déterminer un geste du terminal sur la base d'un second capteur monté sur le terminal, et déterminer la position abritée sur la base du geste.

11. Appareil pour transmettre un signal de liaison montante, l'appareil comportant :
un processeur ; et
une mémoire configurée pour stocker une instruction exécutable par le processeur ;
dans lequel le processeur est configuré pour mettre en œuvre le procédé selon l'une quelconque des revendications 1 à 5.

12. Support de stockage non transitoire lisible par ordinateur dans lequel sont stockées des instructions qui, lorsqu'elles sont exécutées par un processeur d'un dispositif, amènent le dispositif à mettre en œuvre le procédé selon l'une quelconque des revendications 1 à 5.
